(19)

Europäisches
Patentamt
European
Patent Office
Office européen
des brevets

(11) EP 2 135 888 A1

(12) EUROPEAN PATENT APPLICATION
published in accordance with Art. 153(4) EPC

(43) Date of publication:
23.12.2009 Bulletin 2009/52

(51) Int Cl.:
*C08G 65/10* (2006.01)

(21) Application number: 08740085.9

(22) Date of filing: 09.04.2008

(86) International application number:
PCT/JP2008/056982

(87) International publication number:
WO 2008/126850 (23.10.2008 Gazette 2008/43)

(84) Designated Contracting States:
AT BE BG CH CY CZ DE DK EE ES FI FR GB GR
HR HU IE IS IT LI LT LU LV MC MT NL NO PL PT
RO SE SI SK TR

(30) Priority: 10.04.2007 JP 2007102507

(71) Applicant: Asahi Glass Company, Limited
Chiyoda-ku
Tokyo 100-8405 (JP)

(72) Inventors:
• KADOWAKI, Yoshinobu
Kamisu-city
Ibaraki 314-0195 (JP)

• IKAI, Shigeru
Kamisu-city
Ibaraki 314-0195 (JP)
• SASAO, Yasuyuki
Kamisu-city
Ibaraki 314-0195 (JP)
• YAMADA, Kazuhiko
Tokyo 100-8405 (JP)
• YAMADA, Kenji
Tokyo 100-8405 (JP)

(74) Representative: Hartz, Nikolai
Wächtershäuser & Hartz
Patentanwälte
Weinstrasse 8
80333 München (DE)

(54) **COMPOSITE METAL CYANIDE COMPLEX CATALYST HAVING ORGANIC LIGAND, METHOD FOR PRODUCING THE SAME AND METHOD FOR PRODUCING POLYETHER POLYOL**

(57) To provide a process for producing, simply and with high reproducibility, a double metal cyanide complex catalyst having an organic ligand, which has a high catalytic activity, a small particle size and a high particle size uniformity.

A process for producing a double metal cyanide complex catalyst having an organic ligand, comprising (a) a step of contacting an aqueous metal halide compound solution and an aqueous transition metal cyanide compound solution in a laminar flow state to obtain a liquid containing a double metal cyanide complex, and (b) a step of mixing the liquid containing a double metal cyanide complex, and an organic ligand, to obtain a dispersion containing a double metal cyanide complex catalyst having an organic ligand.

Fig. 1

EP 2 135 888 A1

**Description**

TECHNICAL FIELD

The present invention relates to a double metal cyanide complex catalyst having an organic ligand, a process for its production, and a method for producing a polyether polyol.

BACKGROUND ART

A polyether polyol useful as a raw material for polyurethane foams, polyurethane elastomers, adhesives, coating materials, sealants, etc., is produced by subjecting an alkylene oxide (such as ethylene oxide or propylene oxide) to ring-opening polymerization in the presence of a ring-opening polymerization catalyst and an initiator having active hydrogen atoms. As such a ring-opening polymerization catalyst, a double metal cyanide complex catalyst having an organic ligand is known (hereinafter, "a double metal cyanide complex catalyst having an organic ligand" will be referred to as a DMC catalyst).

A DMC catalyst may be a compound having an organic ligand, water and zinc chloride coordinated to zinc hexacyano cobaltate ($Zn_3[Co(CN)_6]_2$). Such a DMC catalyst is produced, for example, by a method wherein an aqueous solution of excessive zinc chloride and an aqueous solution of an alkali metal hexacyano cobaltate are mixed to precipitate a solid double metal cyanide complex, and then, the liquid containing the double metal cyanide complex and an organic ligand are mixed.

The following DMC catalysts have been proposed as DMC catalysts having high catalytic activities and long useful life.

(1) A DMC catalyst having tert-butyl alcohol coordinated as an organic ligand (Patent Document 1).
However, the DMC catalyst (1) contains a crystalline catalyst component substantially and thus has a problem such that a catalyst poisoning or an action as a diluting agent is likely to result as compared with a non-crystalline catalyst. As methods for producing a DMC catalyst containing a less amount of a crystalline catalyst component, the following methods have been proposed.
(2) A method for producing a fine particulate DMC catalyst by mixing an aqueous cyano cobaltate solution and an aqueous zinc chloride solution by means of a homogenizer (Patent Document 2).
(3) A method for producing a fine particulate DMC catalyst by using ultrasonic waves and/or electromagnetic radiation at the time of mixing an aqueous cyano cobaltate solution and an aqueous zinc chloride solution (Patent Document 3).
However, the methods (2) and (3) have problems such that it is difficult to control the supply of the aqueous cyano cobaltate solution and the aqueous zinc chloride solution, the production process is cumbersome, and the particle size tends to be non-uniform. Such a DMC catalyst having a non-uniform particle size has problems such that the molecular weight distribution of a polyether polyol thereby obtainable tends to be broad; the unsaturation degree of a polyether polyol thereby obtainable tends to be high; the viscosity of a polyether polyol thereby obtainable tends to be high; and it is difficult to make the molecular weight of the polyether polyol high. Further, reproducibility of the particle size is poor, whereby there will be fluctuation in the quality of the polyether polyol thereby obtainable.
The following method has been proposed as another method for producing a DMC catalyst.
(4) A method for producing a DMC catalyst, wherein an aqueous metal salt solution and an aqueous metal cyanide solution are continuously contacted with stirring (under a turbulent flow condition) (Patent Document 4).

According to the method (4), the particle size of the DMC catalyst may be made small due to shearing and diffusion by stirring. However, the method (4) has problems such that it is difficult to control the particle size, as particles tend to become enlarged due to e.g. collision among individual particles; and coordination of an organic ligand to the double metal cyanide complex is likely to be inadequate.

As described above, by conventional methods for producing DMC catalysts, it is not possible to obtain fine and uniform particles simply and with good reproducibility.

Patent Document 1: JP-A-04-145123
Patent Document 2: JP-A-07-196778
Patent Document 3: JP-A-2004-535502
Patent Document 4: JP-A-2005-015786

DISCLOSURE OF THE INVENTION

OBJECTS TO BE ACCOMPLISHED BY THE INVENTION

The present invention is to provide a process for producing, simply and with good reproducibility, a DMC catalyst which has a high catalytic activity, a small particle size and a high particle size uniformity; a DMC catalyst which has a high catalytic activity, a small particle size and a high particle size uniformity; and a method for producing, efficiently and with a constant quality, a polyether polyol which has a narrow molecular weight distribution, a low unsaturation degree, a low viscosity and a high molecular weight.

MEANS TO ACCOMPLISH THE OBJECTS

The process for producing a DMC catalyst of the present invention comprises the following steps (a) and (b):

(a) a step of contacting an aqueous metal halide compound solution and an aqueous transition metal cyanide compound solution in a laminar flow state to obtain a liquid containing a double metal cyanide complex, and
(b) a step of mixing the liquid containing a double metal cyanide complex, and an organic ligand, to obtain a dispersion containing a double metal cyanide complex catalyst having an organic ligand.

The above step (a) is preferably the following step (a-1):

(a-1) a step of supplying the aqueous transition metal cyanide compound solution continuously to a first flow path in a first reactor, the inside of which is divided into the first flow path and a second flow path by a membrane having pores; supplying the aqueous metal halide compound solution continuously to the second flow path; and while permitting the aqueous metal halide compound solution in the second flow path to pass through the pores of the membrane in a laminar flow state, pushing the aqueous metal halide compound solution out of the pores of the membrane in the form of fine droplets into the aqueous transition metal cyanide compound solution flowing in a laminar flow state in the first flow path, to let the aqueous transition metal cyanide compound solution and the aqueous metal halide compound solution in the form of fine droplets contact each other in a laminar flow state in the first flow path, thereby to obtain the liquid containing a double metal cyanide complex.
Each laminar flow state as mentioned above, is represented by a Reynolds number of at most 2,100.
The above step (b) is preferably the following step (b-1):
(b-1) a step of supplying the liquid containing a double metal cyanide complex, and an organic ligand or an aqueous organic ligand solution to a second reactor, followed by stirring, to obtain the dispersion containing a DMC catalyst.

Further, the process preferably has the following step (c):

(c) a step of filtering the dispersion containing a DMC catalyst.

Further, the process preferably has the following step (d):

(d) a step of washing the DMC catalyst obtained in the step (c).

The above steps (c) and (d) are preferably the following steps (c-1), (d-1) and (c-2):

(c-1) a step of filtering the dispersion containing a DMC catalyst to obtain a filter cake of the DMC catalyst,
(d-1) a step of mixing the filter cake and an organic ligand or an aqueous organic ligand solution, and stirring the mixed liquid at from 0 to 100°C to wash the DMC catalyst,
(c-2) a step of filtering the above mixed liquid to obtain a filter cake.

In the filter cake obtained in the step (c-1) or (c-2), the content of the DMC catalyst is preferably from 20 to 60 mass%.
The above steps (d-1) and (c-2) are preferably repeated at least twice.
The DMC catalyst of the present invention is a DMC catalyst obtained by the process of the present invention and is **characterized in that** its specific surface area is from 20 to 150 $m^2$/g as measured by BET method, and the pore volume of at most 3 nm pores is from $0.05 \times 10^{-3}$ to $10 \times 10^{-3}$ cc/g as calculated by DFT method based on the specific surface area.
In the DMC catalyst of the present invention, the desorption temperature of the organic ligand is preferably from 250 to 390°C.

The above organic ligand is preferably at least one member selected from the group consisting of tert-butyl alcohol, n-butyl alcohol, isobutyl alcohol, tert-pentyl alcohol, isopentyl alcohol, N,N-dimethylacetamide, ethylene glycol dimethyl ether, diethylene glycol dimethyl ether, triethylene glycol dimethyl ether, ethylene glycol mono-tert-butyl ether, isopropenyl alcohol and dioxane.

The method for producing a polyether polyol of the present invention comprises subjecting an alkylene oxide to ring-opening polymerization in the presence of a DMC catalyst obtained by the process of the present invention, and an initiator having active hydrogen atoms.

EFFECTS OF THE INVENTION

By the process for producing a DMC catalyst of the present invention, it is possible to produce, simply and with good reproducibility, a DMC catalyst which has a high catalytic activity, a small particle size and a high particle size uniformity.

The DMC catalyst of the present invention has a high catalytic activity, a small particle size and a high particle size uniformity.

By the method for producing a polyether polyol of the present invention, it is possible to produce, efficiently and with a constant quality, a polyether polyol which has a narrow molecular weight distribution, a low unsaturation degree, a low viscosity and a high molecular weight.

BRIEF DESCRIPTION OF THE DRAWINGS

Fig. 1 is a schematic diagram illustrating an example of an apparatus for producing a DMC catalyst.
Fig. 2 is a cross-sectional view showing an example of the first reactor.
Fig. 3 is a top view showing a first member constituting the first reactor.
Fig. 4 is a top view showing a second member constituting the first reactor.
Fig. 5 is a top view showing a third member (membrane) constituting the first reactor.
Fig. 6 is a top view showing a fourth member constituting the first reactor.
Fig. 7 is a top view showing a fifth member constituting the first reactor.
Fig. 8 is a SEM photograph of the DMC catalyst in Example 1.
Fig. 9 is a temperature/mass reduction graph by a TG-DTA analysis in Example 1.
Fig. 10 is a SEM photograph of the DMC catalyst in Example 7.
Fig. 11 is a temperature/mass reduction graph by a TG-DTA analysis in Example 7.
Fig. 12 is a SEM photograph of the DMC catalyst in Example 8.

MEANINGS OF SYMBOLS

20: First reactor
22: Membrane
22a: Pores
24: First flow path
26: Second flow path
40: Second reactor

BEST MODE FOR CARRYING OUT THE INVENTION

PROCESS FOR PRODUCING DMC CATALYST

The process for producing a DMC catalyst of the present invention is a process comprising the following steps (a) to (d).

(a) a step of contacting an aqueous metal halide compound solution and an aqueous transition metal cyanide compound solution in a laminar flow state to obtain a liquid containing a double metal cyanide complex,
(b) a step of mixing the liquid containing a double metal cyanide complex, and an organic ligand to obtain a dispersion containing a DMC catalyst,
(c) as the case requires, a step of filtering the dispersion containing a DMC catalyst, and
(d) as the case requires, a step of washing the DMC catalyst obtained in the step (c).

In the present invention, the liquid containing a double metal cyanide complex means a dispersion containing solid particles of a double metal cyanide complex.

Step (a):

In the step (a), it is preferred that the aqueous metal halide compound solution and the aqueous transition metal cyanide compound solution are permitted to flow at a constant flow rate and continuously contact and react in a laminar state to precipitate solid particles of a double metal cyanide complex.

The method for contacting the aqueous metal halide compound solution and the aqueous transition metal cyanide compound solution in a laminar state is not particularly limited, so long as it is a method capable of contacting the aqueous metal halide compound solution and the aqueous transition metal cyanide compound solution in a laminar flow state.

As a reactor capable of realizing the laminar flow state, the following ones may be mentioned.

A multi-lamination type microreactor wherein two liquids in a laminar flow state are permitted to flow in parallel and contact each other at the liquid interface.

A cyclone type microreactor wherein two liquids in a laminar flow state are introduced spirally or radially in a reaction region disposed at the center portion of the reactor, and the formed product is discharged inversely radially or spirally from the reaction region.

An interdigital type microreactor wherein a plurality of flow paths formed at equal intervals and flow paths likewise formed to fill the intervals, are combined, so that two liquids in a laminar flow state may be contacted at every flow path width.

A membrane type microreactor wherein to one liquid in a laminar flow state, the other liquid in a laminar flow state is pushed out from a membrane having pores and contacted.

As the reactor capable of realizing a laminar flow state, a membrane type microreactor is preferred wherein to one liquid in a laminar flow state, the other liquid in a laminar flow state is pushed out from a membrane having pores and contacted.

The laminar flow state is a state where the flow of an aqueous solution is stable without turbulence (i.e. a state being not a turbulent flow).

The laminar flow state is usually represented by a Reynolds number obtained by the following formula (1) or (2).

$$L1 = D \cdot u \cdot \rho/\mu \qquad (1)$$

$$L2 = 4 \times r \cdot u \cdot \rho/\mu \qquad (2)$$

L1 is a Reynolds number in a case where the cross-section of the flow path is circular, and D is the inner diameter (m) of the flow path, u is the average flow rate (m/s), $\rho$ is the fluid density (kg/m$^3$), $\mu$ is the fluid viscosity (pa · s).

L2 is a Reynolds number in a case where the cross-section of the flow path is not circular, and r is the hydraulic radius (m) of the flow path = cross-sectional area (m$^2$) of the flow path/circumferential length of the cross-section of the flow path in contact with the fluid, and u, $\rho$ and $\rho$ are the same as defined in the formula (1).

In the present invention, the inner diameter D of a flow path is represented by the minimum diameter in the cross-section of the flow path. That is, in a case where the inner diameter D of a flow path changes along the way, an inner diameter at a site where the flow path becomes narrowest is taken as the inner diameter D.

The Reynolds number is preferably at most 2,100, more preferably at most 1,500, particularly preferably at most 300. When the Reynolds number is at most 2,100, each aqueous solution will be in a laminar flow state, whereby solid particles of a double metal cyanide complex having a uniform size will be precipitated. On the other hand, if the Reynolds number exceeds 2,100, the flow of each aqueous solution becomes a turbulent flow, whereby particle sizes of a solid double metal cyanide complex to be precipitated tend to be non-uniform.

The metal (M$^1$) of the metal halide compound is preferably Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) or Pb(II), more preferably Zn(II) or Fe(II). The halogen of the metal halide compound is preferably chlorine. As the metal halide compound, zinc chloride (ZnCl$_2$) is particularly preferred. The concentration of the aqueous metal halide compound solution is preferably at least 10 mass% and at most the saturation concentration. When the concentration of the aqueous metal halide compound solution is at least 10 mass%, the metal halide compound will be sufficiently taken into the double metal cyanide complex, whereby the catalytic activity of the obtainable DMC catalyst will be high. When the concentration of the aqueous metal halide compound solution is at most the saturation concentration, mixing of the aqueous solutions can be uniformly carried out, whereby the catalytic activity of the obtainable DMC catalyst will be high.

The metal ($M^2$) of the transition metal cyanide compound is preferably Fe(II), Fe(III), Co(II), Co(III), Cr(II), Cr(III), Mn(II), Mn(III), Ni(II), V(IV) or V(V), more preferably Co(III) or Fe(III).

The transition metal cyanide compound is preferably an alkali metal cyano metallate, more preferably an alkali metal hexacyano metallate, particularly preferably an alkali metal hexacyano cobaltate.

A specific example of the transition metal cyanide compound may, for example, be $H_3Fe(CN)_6$, $H_3Co(CN)_6$, $K_3Fe(CN)_6$, $K_3Co(CN)_6$, $Na_3Fe(CN)_6$, $Na_3Co(CN)_6$, $Mg_3(Fe(CN)_6)_2$, $Mg_3(Co(CN)_6)_2$, $(NH_4)_3Fe(CN)_6$ or $(NH_4)_3Co(CN)_6$, particularly preferably $K_3Co(CN)_6$ (potassium hexacyano cobaltate).

The concentration of the aqueous transition metal cyanide compound solution is preferably at most 50 mass%, more preferably at most 20 mass%. Further, the concentration of the aqueous transition metal cyanide compound solution is preferably at least 2.0 mass%. When the concentration of the aqueous transition metal cyanide compound solution is at most 50 mass%, mixing of the aqueous solutions can be carried out uniformly, and the catalytic activity of the obtainable DMC catalyst will be high. When the concentration of the aqueous transition metal cyanide compound solution is at least 2.0 mass%, the metal halide compound taken into the double metal cyanide complex will not be dissolved in water, whereby the catalytic activity of the obtainable DMC catalyst will be high.

The molar relative ratio of the metal halide compound to the transition metal cyanide compound (i.e. metal halide compound/transition metal cyanide compound) is preferably from 12/1 to 1.6/1, more preferably from 8/1 to 3/1. When such a molar relative ratio is at least 1.6/1, the transition metal cyanide compound remaining in waste water will be little, whereby the cost for waste water treatment can be reduced.

Step (b):

As the organic ligand, a water-soluble one is preferred.

The organic ligand may, for example, be tert-butyl alcohol, n-butyl alcohol, isobutyl alcohol, tert-pentyl alcohol, isopentyl alcohol, N,N-dimethylacetamide, glyme (ethylene glycol dimethyl ether), diglyme (diethylene glycol dimethyl ether), triglyme (triethylene glycol dimethyl ether), ethylene glycol mono-tert-butyl ether, isopropyl alcohol or dioxane. The dioxane may be 1,4-dioxane or 1,3-dioxane, and 1,4-dioxane is preferred.

As the organic ligand, one type may be used alone, or two or more types may be used in combination.

As the organic ligand, tert-butyl alcohol alone or a combination of tert-butyl alcohol with another compound, is preferred. As such another compound, an alcohol, an ether, a ketone, an ester, an amine or an amide is preferred, and tert-pentyl alcohol or ethylene glycol mono-tert-butyl ether is particularly preferred.

The concentration of the organic ligand in the mixed liquid is more than 0 mass%, preferably at least 2 mass%, more preferably at least 10 mass%, further preferably at least 20 mass%. On the other hand, the concentration of the organic ligand in the mixed liquid is preferably at most 80 mass%, more preferably at most 70 mass%. When the concentration of the organic ligand is at least 10 mass%, the metal halide compound and the organic ligand will be sufficiently coordinated, whereby the catalytic activity of the DMC catalyst will be high, such being more preferred. When the concentration of the organic ligand is at most 80 mass%, the catalyst poison is less likely to precipitate, and the catalyst poison can be sufficiently removed in the step (c), whereby the catalytic activity of the obtainable DMC catalyst will be high, such being preferred. The mixed liquid is a liquid immediately after mixing the liquid containing a double metal cyanide complex and an organic ligand (or an aqueous organic ligand solution).

Steps (c) and (d):

As the case requires, the dispersion containing the DMC catalyst obtained in the step (b) will be filtered, and as the case requires, the DMC catalyst is washed, whereby the metal halide compound, alkali metal ions, etc. excessively present will be removed.

The filtration method may, for example, be gravity filtration, filtration under reduced pressure, pressure filtration, centrifugal separation or membrane filtration. From the viewpoint of the productivity, filtration under reduced pressure or pressure filtration is preferred.

APPARATUS FOR PRODUCING DMC CATALYST

Now, a process for producing a DMC catalyst of the present invention will be described in detail with reference to an example of an apparatus for producing a DMC catalyst. It should be mentioned that the process for producing a DMC catalyst of the present invention is not limited to the process of using the following apparatus for producing a DMC catalyst, so long as it is a process comprising the above-mentioned steps (a) and (b).

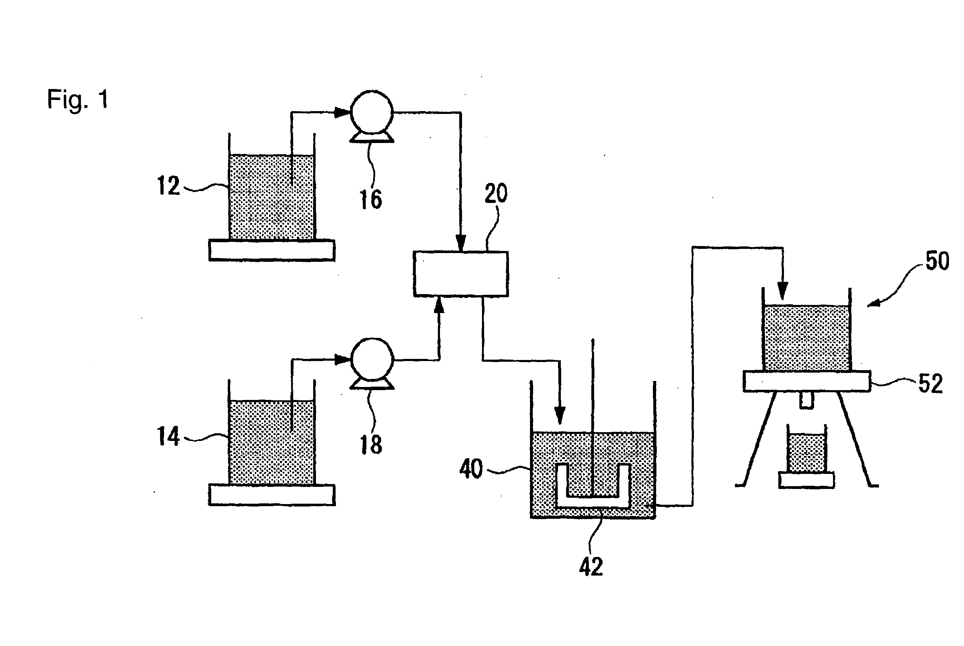

Fig. 1 is a schematic diagram illustrating an example of the apparatus for producing a DMC catalyst. The apparatus for producing a DMC catalyst comprises a storage tank 12 to store the aqueous metal halide compound solution, a storage tank 14 to store the aqueous transition metal cyanide compound solution, a first reactor 20 (microreactor) to contact the aqueous metal halide compound solution and the aqueous transition metal cyanide compound solution in a laminar flow state, a pump 16 to supply the aqueous metal halide compound solution in the storage tank 12 to the first reactor 20, a pump 18 to supply the aqueous transition metal cyanide compound solution in the storage tank 14 to the first reactor 20, a second reactor 40 to mix the liquid containing a double metal cyanide complex obtained in the first reactor 20, and an organic ligand and a filtration/washing apparatus 50 to filtrate the dispersion containing a DMC catalyst obtained in the second reactor 40 and to wash the DMC catalyst.

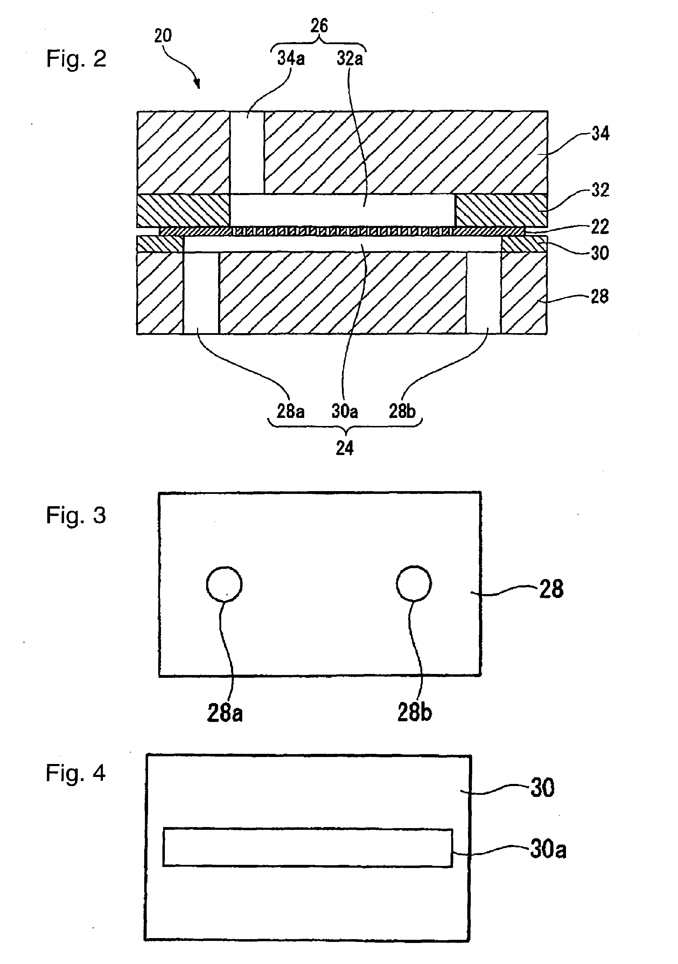

As shown in Fig. 2, the first reactor 20 is a microreactor, the interior of which is divided by a membrane 22 into a first flow path 24 and a second flow path 26.

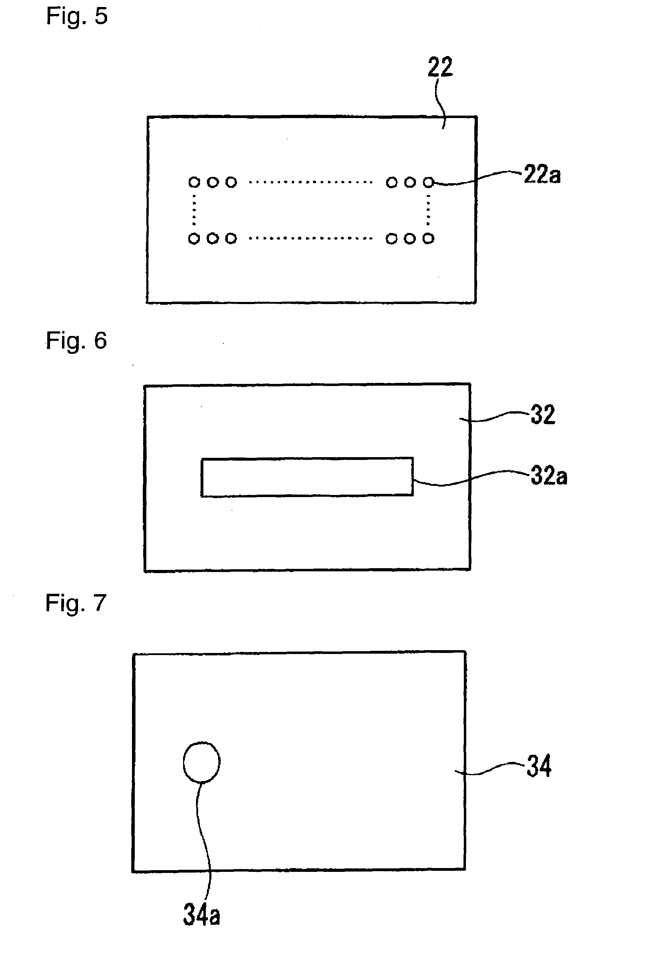

The first reactor 20 is constituted by sequentially laminating a first member 28 shown in Fig. 3, a second member 30 shown in Fig. 4, a third member (membrane 22) shown in Fig. 5, a fourth member 32 shown in Fig. 6 and a fifth member 34 shown in Fig. 7.

In the first member 28, through holes 28a and 28b are formed to constitute parts of a first flow path 24. The through hole 28a constitutes an inlet for the aqueous transition metal cyanide compound solution, and the through hole 28b constitutes an outlet for the liquid containing a double metal cyanide complex.

In the second member 30, a cutout 30a is formed to constitute a part of the first flow path 24. At both ends of the cutout 30a, the through holes 28a and 28b of the first member 28 are located.

The third member is a membrane 22 having pores 22a. The membrane 22 may be a porous membrane having a plurality of pores 22a or a uniforate membrane having a single pore. The membrane 22 shown in the drawing is an example of the porous membrane. By providing the membrane 22 having pores 22a, fine droplets of the aqueous metal halide compound solution pushed out through the pores 22a into the aqueous transition metal cyanide compound solution flowing in the first flow path 24 in a laminar flow state, will always have a constant particle size, whereby solid particles of the double metal cyanide complex having a substantially uniform particle size tend to be precipitated.

The pore diameter of pores 22a may be a pore diameter whereby the laminar flow of the aqueous metal halide compound solution can be maintained, i.e. a pore diameter whereby the flow of the aqueous metal halide compound solution will have a Reynolds number of at most 2,100.

The pore diameter of pores 22a is preferably from 0.01 to 5,000 $\mu$m, more preferably from 1 to 500 $\mu$m. When the pore diameter of pores 22a is within such a range, uniform fine droplets of the aqueous metal halide compound solution can easily be obtained. When the size of droplets is small, solid particles of the double metal cyanide complex to be precipitated will be fine and uniform, whereby the obtainable DMC catalyst will also be fine and uniform. For example, in order to bring the Reynolds number to be 200, pores 22a having a pore diameter of 80 $\mu$m may be formed with a pitch of 300 $\mu$m in an array of 8 rows $\times$ 166 columns in a membrane 22 made of SUS304 having a thickness of 50 $\mu$m.

The thickness of the membrane 22 is preferably from 1 to 200 $\mu$m. When the thickness of the membrane 22 is at least 1 $\mu$m, it will be a membrane having a sufficient strength. When the thickness of the membrane 22 is at most 2,000 $\mu$m, the pressure to push out the aqueous metal halide compound solution will not be too high.

The porosity of the membrane 22 is preferably from 10 to 90%. When the porosity of the membrane 22 is at least 10%, the pressure to push out the aqueous metal halide compound solution will not be too high. When the porosity of the membrane 22 is at most 90%, the membrane will have a sufficient strength. The porosity is a ratio of the sum of opening areas of pores 22a to the area of the membrane 22 in contact with the aqueous metal halide compound solution in the second flow path 26 (i.e. sum of opening areas of pores 22a/area of membrane 22).

The membrane 22 may be set so that it will be in parallel with the horizontal plane, or may be set so that it has an angle of at least 30° to the horizontal plane. In the case where the membrane 22 is set to have an angle of at least 30° to the horizontal plane, it is preferably set to be vertical to the horizontal plane.

Further, in a case where membrane 22 is set to have an angle of at least 30° to the horizontal plane, it is preferably set so that the aqueous metal halide compound solution and the aqueous transition metal cyanide compound solution will flow from below upwards along the membrane 22.

In a case where the membrane 22 is set to have an angle of at least 30° to the horizontal plane and to let the aqueous metal halide compound solution and the aqueous transition metal cyanide compound solution flow from below upwards along the membrane 22, a pressure corresponding to [(density of the aqueous metal halide compound solution - density of the aqueous transition metal cyanide compound solution) $\times$ liquid depth] will be exerted to the aqueous metal halide compound solution side due to the difference in the density between the aqueous metal halide compound solution and the aqueous transition metal cyanide compound solution, when it is assumed that at an optional horizontal plane in the height direction, the respective liquid depths of the aqueous metal halide compound solution and the aqueous transition metal cyanide compound solution are substantially equal. Therefore, as compared with a case where the aqueous metal halide compound solution and the aqueous transition metal cyanide compound solution are permitted to flow in parallel with the horizontal plane, the pressure difference distribution of the aqueous metal halide compound solution and the aqueous transition metal cyanide compound solution in the entire flow path can be made relatively narrow. As a result, the supply rate of the aqueous metal halide compound solution pushed out from the respective pores 22a of the membrane 22 can be made uniform, and fine droplets of the aqueous metal halide compound solution having a uniform particle size can be constantly obtained, whereby solid particles of the double metal cyanide complex to be precipitated can be made uniform.

In the fourth member 32, a cutout 32a is formed to constitute a part of the second flow path 26.

In the fifth member 34, a through hole 34a is formed to constitute a part of the second flow path 26. The through hole 34a is located at one end of the cutout 32a of the fourth member 32.

The material for the first member 28, second member 30, fourth member 32 and fifth member 34 is preferably polytetrafluoroethylene (hereinafter referred to as PTFE), since it is strong against corrosion and can easily be processed.

The material for the third member (membrane 22) may be selected in consideration of the durability against the aqueous metal halide compound solution and the aqueous transition metal cyanide compound solution. The material for the membrane 22 is preferably a resin or a metal, more preferably a fluororesin or a sintered product of metal powder or metal fiber. The sintered product of metal powder or metal fiber is preferably a membrane obtained by sintering a spherical metal powder having a uniform size, or a silver membrane filter. Further, from the viewpoint of the productivity, a hollow fiber module having a plurality of hollow fibers bundled may be employed as the membrane 22.

The membrane 22 is preferably hydrophobic. The membrane 22 may be surface-treated, as the case requires. In a case where the membrane 22 is a metal, it is possible to impart hydrophobicity by applying surface treatment with e.g. a silane coupling agent.

The second reactor 40 has a structure into which the liquid containing a double metal cyanide complex, and an organic ligand or an aqueous organic ligand solution, are introduced, and it is equipped with a stirring device 42 to mix the two liquids. The structure or constitution of the second reactor 40 is not particularly limited.

The filtration/washing apparatus 50 is equipped with a filtration device 52 and a washing device (not shown). The filtration device 52 may, for example, be a centrifugal filtration device, a reduced pressure filtration device, a pressure filtration device, a gravity filtration device or a membrane filtration device, but from the viewpoint of the productivity, a reduced pressure filtration device or a pressure filtration device is preferred.

The process for producing a DMC catalyst using the apparatus for producing a DMC catalyst in Fig. 1 comprises the following steps (a-1), (b-1), (c-1), (d-1), (c-2) and (e-1).

(a-1) A step of supplying the aqueous transition metal cyanide compound solution continuously to a first flow path 24 in a first reactor 20, the inside of which is divided into the first flow path 24 and a second flow path 26 by a membrane 22 having pores 22a; supplying the aqueous metal halide compound solution continuously to the second flow path 26; and while permitting the aqueous metal halide compound solution in the second flow path 26 to pass through the pores 22a of the membrane 22 in a laminar flow state, pushing the aqueous metal halide compound solution out of the pores 22a of the membrane 22 in the form of fine droplets into the aqueous transition metal cyanide compound solution flowing in a laminar flow state in the first flow path 24, to let the aqueous transition metal cyanide compound solution and the aqueous metal halide compound solution in the form of fine droplets contact each other in a laminar flow sate in the first flow path 24, thereby to obtain the liquid containing a double metal cyanide complex.

(b-1) A step of supplying the liquid containing a double metal cyanide complex, and an organic ligand or an aqueous organic ligand solution to a second reactor 40, followed by stirring, to obtain a dispersion containing a DMC catalyst.

(c-1) A step of filtering the dispersion containing a DMC catalyst by a filtration device 52 to obtain a filter cake of the DMC catalyst.

(d-1) A step of mixing the filter cake and an organic ligand or an aqueous organic ligand solution in a washing device, and stirring the mixed liquid from 0 to 100°C to wash the DMC catalyst.

(c-2) A step of filtering the above mixed liquid in a filtration device 52 to obtain a filter cake.

(e-1) As the case requires, a step of drying the filter cake.

Step (a-1):

Specifically, the pump 18 is driven to continuously supply the aqueous transition metal cyanide compound solution from the storage tank 14 to the first flow path 24 of the first reactor 20; at the same time, the pump 16 is driven to continuously supply the aqueous metal halide compound solution from the storage tank 12 to the second flow path 26 of the first reactor 20; while permitting the aqueous metal halide compound solution in the second flow path 26 to pass through the pores 22a of the membrane 22 in a laminar flow state, the aqueous metal halide compound solution is pushed out from the pores 22a of the membrane 22 in the form of fine droplets in a laminar flow state into the aqueous transition metal cyanide compound solution flowing in a laminar flow state in the first flow path 24, to let the aqueous transition metal cyanide compound solution and the aqueous metal halide compound solution in the form of fine droplets contact and react each other in a laminar flow state in the first flow path 24, thereby to precipitate solid particles of a double metal cyanide complex.

In the first reactor 20, the aqueous metal halide compound solution is introduced from the through hole 34a, flows in the second flow path 26 and passes through pores 22a of the membrane 22 in a laminar flow state, whereby it presents a substantially constant linear pressure at the surface of the membrane 22. On the other hand, the aqueous transition metal cyanide compound solution is introduced from the through hole 28a, and while it flows in the first flow path 24 in a laminar flow state, it is contacted with fine droplets of the aqueous metal halide compound solution and discharged from the through hole 28b.

The supply rate of the aqueous transition metal cyanide compound solution from the storage tank 14 to the first flow path 24 of the first reactor 20, and the supply amount of the aqueous metal halide compound solution from the storage tank 12 to the second flow path 26 of the first reactor 20, are adjusted so that the aqueous transition metal cyanide compound solution in the first flow path 24 and the aqueous metal halide compound solution in the pores 22a of the membrane 22 will be in a laminar flow state.

The pore diameter of pores 22a of the membrane 22 is adjusted to reduce the flow rate of the aqueous metal halide compound solution in the pores 22a and to increase the flow rate of the aqueous transition metal cyanide compound solution in the first flow path 24, whereby the aqueous metal halide compound solution will always be pushed out from the pores 22a under a constant condition and will be separated as fine droplets having substantially the same size as the pore diameter of the pores 22a. On the other hand, if the flow rate of the aqueous metal halide compound solution in the pores 22a is increased, and the flow rate of the aqueous transition metal cyanide compound solution in the first flow rate 24 is reduced, fine droplets will be larger than the pore diameter of pores 22a, such being disadvantageous in order to precipitate fine and uniform solid particles of a double metal cyanide complex.

The ratio of the flow rate $u1$ of the aqueous transition metal cyanide compound solution in the first flow path 24 to the flow rate $u2$ of the aqueous metal halide compound solution in the pores 22a (i.e. $u1/u2$) is preferably from 0.01 to 50,000, more preferably from 10 to 50,000, further preferably from 1,000 to 15,000, particularly preferably from 1,000 to 15,000. When the ratio ($u1/u2$) is at most 50,000, the aqueous transition metal cyanide compound solution will not be excessively consumed, whereby the above-mentioned molar relative ratio of the metal halide compound to the transition metal cyanide compound will not depart from the preferred range, such being economically advantageous. When the ratio ($u1/u2$) is at least 0.01, the effect to separate fine droplets of the aqueous metal halide compound solution by the flow of the aqueous transition metal cyanide compound solution, can be sufficiently obtained, whereby fine and uniform solid particles of a double metal cyanide complex will easily be precipitated. The flow rate is measured at the surface of the membrane 22.

The temperatures of the aqueous metal halide compound solution in the storage tank 12 and the aqueous transition metal cyanide compound solution in the storage tank 14 are preferably at most the following reaction temperature.

The temperature (reaction temperature) of the aqueous metal halide compound solution and the aqueous transition metal cyanide compound solution in the first reactor 20 is preferably from 40 to 125°C, more preferably from 40 to 100°C, particularly preferably from 40 to 90°C. When the reaction temperature is at least 40°C, the reaction of the metal halide compound with the transition metal cyanide compound will sufficiently proceed, whereby a DMC catalyst having a high catalytic activity can be obtained. When the reaction temperature is at most 125°C, the formed double metal cyanide complex will scarcely be crystallized, whereby a DMC catalyst having a high catalytic activity can be obtained.

The average retention time (reaction time) of the aqueous metal halide compound solution and the aqueous transition metal cyanide compound solution in the first reactor 20 is preferably from 10 seconds to one minute. When the average retention time is at least 10 seconds, the reaction of the metal halide compound with the transition metal cyanide compound will sufficiently proceed, whereby a DMC catalyst having a high catalytic activity can be obtained. Even if the average retention time is prolonged, there will be no problem with respect to the performance of the DMC catalyst, but the productivity of the DMC catalyst tends to be low, and the production cost tends to be high. Accordingly, it is preferred to employ a relatively short average retention time within the above range, so long as a DMC catalyst having the desired catalytic activity can be obtained.

Step (b-1):

The temperature (reaction temperature) of the mixed liquid comprising the liquid containing a double metal cyanide complex and an organic ligand or an aqueous organic ligand solution in the second reactor 40, is preferably from 40 to 100°C, more preferably from 40 to 80°C. When the reaction temperature is at least 40°C, coordination of the organic ligand to the double metal cyanide complex can sufficiently be carried out, and the particle size of the DMC catalyst will not be too small, whereby the filtration property in the step (c-1) will be good. When the reaction temperature is at most 100°C, deterioration of the catalytic activity of the DMC catalyst can be suppressed.

The average retention time of the mixed liquid comprising the liquid containing the double metal cyanide complex and an organic ligand or an aqueous organic ligand solution in the second reactor 40, is preferably from 10 minutes to 3 hours. When the average retention time is at least 10 minutes, coordination of the organic ligand to the double metal cyanide complex can be sufficiently carried out, and the particle size of the DMC catalyst will not be too small, whereby the filtration property in the step (c-1) will be good. Even if the average retention time is prolonged, there will be no problem with respect to the performance of the DMC catalyst, but the productivity of the DMC catalyst tends to be low. Accordingly, the upper limit is preferably 3 hours from the industrial viewpoint.

Step (c-1):

The dispersion (slurry) containing the DMC catalyst is filtered by a filtration device 52 to obtain a filter cake containing the DMC catalyst, an excess metal cyanide compound, organic ligand, water and alkali metal salt, etc.

The content of the DMC catalyst in the filter cake is preferably from 20 to 60 mass%. When the content of the DMC catalyst in the filter cake is within such a range, deterioration of the catalytic activity of the DMC catalyst can be suppressed.

Step (d-1):

At the time of washing the filter cake, the filter cake and an organic ligand or an aqueous organic ligand solution are mixed, and the mixed liquid is stirred at a temperature of preferably from 0 to 100°C, more preferably from 40 to 80°C to wash the DMC catalyst.

The organic ligand may be the one exemplified in the above step (b). The organic ligand may be the same organic ligand in the step (b-1) or may be a different organic ligand. Unless the organic ligand to be used in the step (d-1) has a particularly strong coordination power as compared with the organic ligand already coordinated in the DMC catalyst, it is less likely that a part or all of the organic ligand already coordinated will be substituted by the organic ligand to be used in the step (d-1).

Step (c-2):

The above mixed liquid is subjected to filtration to obtain a filter cake.

The content of the DMC catalyst in the filter cake is preferably from 20 to 60 mass%. When the content of the DMC catalyst in the filter cake is within such a range, deterioration of the catalytic activity of the DMC catalyst can be suppressed.

The steps (d-1) and (c-2) are preferably repeated at least twice, more preferably from twice to four times.

By carrying out the steps (d-1) and (c-2) repeatedly, it is possible to further remove the remaining alkali metal ions, etc., or to again coordinate the organic ligand possibly washed, such being preferred.

The filter cake obtained in the step (c-2) may be, without being dried, dispersed in a polyol (such as an initiator) to prepare a DMC catalyst slurry, and such a slurry may be used as a DMC catalyst in the production of a polyether polyol as described hereinafter. If the filter cake is dried, the DMC catalyst tends to aggregate, whereby pulverization is required, but if the DMC catalyst obtained by such pulverization is used for the production of a polyether polyol, the molecular weight distribution of the obtainable polyether polyol tends to be broad. On the other hand, when a DMC catalyst slurry prepared by dispersing the filter cake in a polyol without drying it, is used for the production of a polyether polyol, the molecular weight distribution of the obtainable polyether polyol tends to be narrow, such being preferred.

Step (e-1):

As the case requires, the filter cake may be dried and then pulverized to obtain a powdery DMC catalyst. The drying temperature is preferably from 0 to 150°C, more preferably from 0 to 90°C. Within such a range, vaporization of the organic ligand coordinated to the DMC catalyst can be suppressed.

The drying method may, for example, be a drying method by heating, a drying method in a vacuum state, or a method wherein the cake is mixed with a hardly volatile liquid and then, a volatile water and an excessive organic ligand may be removed. As such a hardly volatile liquid, a polymer obtained by ring opening of an alkylene oxide may be used, and after dispersing the filter cake containing the DMC catalyst therein, excess amounts of water and an organic ligand may be removed to obtain a catalyst slurry, and such may be used for the polymerization reaction.

In such a case, as the polymer obtained by ring opening of an alkylene oxide, a polyether polyol is preferred. The molecular weight of such a polyether polyol is preferably from 300 to 12,000, more preferably from 500 to 10,000, particularly preferably from 700 to 5,000. The amount of the polyether polyol is preferably from 10 to 95 parts by mass per 100 parts by mass of the DMC catalyst.

DMC CATALYST

The DMC catalyst obtained by the process of the present invention is represented by the following formula (3).

$$M^1_a[M^2_f(CN)_g]_b \cdot c(M^1_hX_i) \cdot d(H_2O) \cdot e(R) \qquad (3)$$

In the formula, $M^1$ is a metal derived from the metal halide compound, $M^2$ is a metal derived from the transition metal cyanide compound, and X is a halogen atom, R is an organic ligand, and each of a, b, c, d, e, f, h and i is a number changeable depending upon e.g. the atomic balances of the metals, the number of coordinated organic ligands, etc.

Preferred elements for $M^1$, $M^2$ and X and preferred compounds for the organic ligand are the same as in the above description of the method for producing a DMC catalyst. A more preferred DMC catalyst obtainable by the process of the present invention may, for example, be $Zn_3[Co(CN)_6]_2 \cdot c(ZnCl_2) \cdot d(H_2O) \cdot e$ (tert-butyl alcohol).

The DMC catalyst obtainable by the process of the present invention is fine and uniform particles having a particle diameter of from 1.0 to 2.5 $\mu$m, as observed by a scanning electromicroscope (hereinafter referred to as SEM). That is, the average particle size of the DMC catalyst obtainable by the process of the present invention is preferably from 1.0 to 2.5 $\mu$m. The average particle size of the DMC catalyst may be obtained by an image analysis of the SEM photograph or may be obtained by measuring the catalyst particles dispersed in methanol by a light scattering method. It is preferred to employ the image analysis. Further, it has a high catalytic activity at a level of at least 170 (kg/g catalyst) as the value of the catalytic activity obtained by the mass of the formed polyol.

The DMC catalyst is preferably composed of a substantially amorphous DMC catalyst. Here, a substantially amorphous DMC catalyst means that substantially no crystalline double metal cyanide complex is contained. Specifically, in its XRD pattern, diffraction line peaks at about $5.07 \times 10^{-10}$ m, about $3.59 \times 10^{-10}$ m, about $2.54 \times 10^{-10}$ m, about $2.28 \times 10^{-10}$ m, etc., attributable to a crystalline double metal cyanide complex, are preferably not present or very small peaks.

The specific surface area of the DMC catalyst by BET method is from 20 to 150 $m^2/g$, preferably from 30 to 100 $m^2/g$. When the specific surface area of the DMC catalyst by BET method is at least 20 $m^2/g$, the DMC catalyst will not have a too dense structure, and an aggregated state tends to be easily disintegrated, whereby a high catalytic activity can be provided. When the specific surface area of the DMC catalyst by BET method is at most 150 $m^2/g$, an aggregated state of the DMC catalyst is likely to be easily disintegrated, whereby active points can easily be provided. However, if the specific surface area exceeds 150 $m^2/g$, the number of active points of the entire catalyst resulting from the disintegration of the aggregated state, tends to be small.

The pore volume of at most 3 nm pores of the DMC catalyst is from $0.05 \times 10^{-3}$ to $10 \times 10^{-3}$ cc/g, preferably from $0.05 \times 10^{-3}$ to $5 \times 10^{-3}$ cc/g, more preferably from $0.1 \times 10^{-3}$ to $3 \times 10^{-3}$ cc/g, particularly preferably from $0.2 \times 10^{-3}$ to $2 \times 10^{-3}$ cc/g. When the pore volume of at most 3 nm pores of the DMC catalyst is at most $10 \times 10^{-3}$ cc/g, such means a catalyst having a dense structure and active points formed by disintegration of the aggregated state will be many. When the pore volume of at most 3 nm pores of the DMC catalyst is at least $0.05 \times 10^{-3}$ cc/g, the aggregated state tends to be a coarse structure, whereby the number of active points formed by disintegration of the aggregated state tends to be small.

The specific surface area of the DMC catalyst obtainable by the present invention tends to be small as compared with the specific surface area of a DMC catalyst obtainable by a conventional method. This is the same as saying that as compared with a DMC catalyst obtainable by a conventional method, the pore volume of at most 3 nm pores of the DMC catalyst obtainable by the present invention is small. This indicates that the DMC catalyst is dense (not coarse). In the case of a conventional DMC catalyst, if the DMC catalyst is dense, the crystallinity tends to be high, and the activity tends to be low. In the present invention, it has been surprisingly found that the denser the DMC catalyst, the higher the catalytic activity. That is, it has been found that the DMC catalyst obtained in the present invention has a low crystallinity of the catalyst and fine particles are densely aggregated.

The pore volume of at most 3 nm pores of the DMC catalyst is measured as follows.

By stepwisely changing the pressure of the absorptive material by BET (Brunauer-Emmett-Telller) method, the specific surface area of the DMC catalyst under each pressure was obtained, and by calculation by DFT (Density Functional Theory) method, the pore size distribution of the DMC catalyst was obtained, whereby the accumulated volume of pores of at most 3 nm is taken as the pore volume of at most 3 nm pores.

Further, the specific surface area of a conventional DMC catalyst is from about 50 to about 700 $m^2/g$, and the pore volume of at most 3 nm pores exceeds $10 \times 10^{-3}$ cc/g. With such a conventional DMC catalyst, along with an increase of the specific surface area, the pore volume of at most 3 nm pores tends to also increase. That is, if the surface area of the catalyst particles becomes large, the void region in the catalyst increases, and the pore volume of at most 3 nm pores likewise increases. As a result, the activity of the catalyst is considered to become high.

Whereas, the specific surface area of the DMC catalyst obtainable by the process of the present invention is from 20 to 150 $m^2/g$, and the pore volume of at most 3 nm pores is at most $10 \times 10^{-3}$ cc/g. Thus, as compared with the conventional DMC catalyst, the specific surface area is small, and the pore volume of at most 3 nm pores is also small, and nevertheless, the activity of the catalyst is equal or higher than the conventional DMC catalyst.

As compared with the conventional DMC catalyst, the DMC catalyst obtainable by the process of the present invention has a substantially dense aggregated state and low crystallinity. Further, the organic ligand is strongly coordinated to the double metal cyanide complex. It is considered that due to such factors, many active points of the catalyst are obtainable. That is, it is considered that active points formed by disintegration of the aggregated state of the DMC catalyst at the site of the reaction are many as compared with the conventional DMC catalyst. Accordingly, it is considered possible to obtain a DMC catalyst having a large catalytic activity per unit area even if the specific surface area is small.

The desorption temperature of the organic ligand of the DMC catalyst is preferably from 250 to 390°C, more preferably from 260 to 380°C. The desorption temperature of an organic ligand is the thermal peak attributable to the organic ligand by a TG-DTA analysis (differential thermogravimetric analysis). Further, the mass decrease in the TG-DTA analysis is preferably at least 10 mass%, more preferably at least 15 mass%.

When the desorption temperature of the organic ligand is at least 250°C, the organic ligand is strongly coordinated to the double metal cyanide complex, whereby a high catalytic activity will be provided, such being preferred. When the desorption temperature of the organic ligand is at most 390°C, coordination of the organic ligand to the double metal cyanide complex will not be too strong, and a high catalytic activity can be provided, such being preferred.

Further, the desorption temperature of an organic ligand of a conventional DMC catalyst is usually 180°C. It is evident that in the DMC catalyst obtainable by the process of the present invention, the organic ligand is strongly coordinated to the double metal cyanide complex. It is thereby considered to be possible to obtain many active points of the catalyst.

In a case where the following measurement of the filtration amount of remaining metal is carried out with respect to a polyether polyol produced by using the DMC catalyst obtained by the process of the present invention, the filtration amount of remaining metal is preferably at least 65 g/30 minutes. The filtration amount of remaining metal being at least 65 g/30 minutes indicates that at the time of completion of the production of a polyether polyol, the DMC catalyst which was in an aggregated state before the production is disintegrated to a substantially fine particle state and is dispersed. That is, it shows that a high catalytic activity is provided, since active points of the DMC catalyst are formed by disintegration of the aggregated state of the catalyst.

The filtration amount of remaining metal is measured as follows.

A glass filter container is attached to a weighed container, and further, a filter paper of 5.0 $\mu$m (PTFE filter, diameter: 480 mm, effective filtration diameter: 410 mm) is attached. A polyether polyol (100 g) produced by using the DMC catalyst is added to hexane (100 g) as a solvent for dilution. The dissolved sample is introduced from the top of the filter paper for filtration. After natural filtration for 30 minutes, the yield of the filtered sample is measured.

METHOD FOR PRODUCING POLYETHER POLYOL

The method for producing a polyether polyol of the present invention is a method which comprises subjecting an alkylene oxide to ring-opening polymerization in the presence of the DMC catalyst obtained by the process of the present invention and an initiator having active hydrogen atoms. Specifically, the DMC catalyst is added to the initiator, and further, while gradually adding an alkylene oxide, the reaction is carried out.

The polyether polyol is a general term for a polyether monool and a polyether polyol.

The DMC catalyst may be in the form of a filter cake in a wet state or in the form of a slurry having the filter cake dispersed in a polyol (such as an initiator) or in the form of a powder obtained by drying it.

The amount of the DMC catalyst is preferably from 1 to 500 ppm, more preferably from 10 to 1,000 ppm, particularly preferably from 10 to 300 ppm, to the initiator.

The DMC catalyst may be added all at once at the beginning, or may be sequentially dividedly added.

The alkylene oxide preferably contains an alkylene oxide having at least two carbon atoms. The alkylene oxide having at least two carbon atoms may, for example, be ethylene oxide, propylene oxide, 1,2-butylene oxide or epichlorohydrine. As the alkylene oxide, one type may be used alone, or two or more types may be used in combination. In a case where two or more types are used in combination, two or more types of alkylene oxides may be mixed and reacted at the same time, or sequentially reacted by adding one type each time.

When the DMC catalyst is used, it may be difficult to react ethylene oxide alone depending upon the initiator, but it can be reacted by mixing it with an alkylene oxide having at least 3 carbon atoms.

As the alkylene oxide, it is preferred to use propylene oxide alone or a combination of propylene oxide with ethylene oxide.

As the initiator having active hydrogen atoms, an initiator having hydroxyl groups is preferred. The number of hydroxyl groups in the initiator is preferably from 1 to 12, more preferably from 2 to 4, particularly preferably from 2 to 3.

The initiator is preferably one having a hydroxyl value of from 2 to 15 times, more preferably from 3 to 10 times, the hydroxyl value of the polyether polyol to be produced.

The hydroxyl value of the initiator is preferably from 70 to 300 mgKOH/g.

The molecular weight of the initiator is preferably at least 500. If the molecular weight of the initiator is small, the ring-opening polymerization of an alkylene oxide may sometimes tend to hardly take place.

Specific examples of the initiator may, for example, be methyl alcohol, isopropyl alcohol, n-butyl alcohol, 2-ethyl hexanol, stearyl alcohol, allyl alcohol, oleyl alcohol, monoethylene glycol, diethylene glycol, propylene glycol, dipropylene glycol, glycerol, trimethylol propane, pentaerythritol, diglycerol, sorbitol, dextrose, methyl glucoxide, sucrose, bisphenol A and alkylene oxide adducts of these compounds.

The reaction temperature is preferably from 30 to 180°C, more preferably from 90 to 140°C, particularly preferably from 100 to 140°C.

The produced polyether polyol may be used as it is for the desired application, or may be subjected to purification such as removal of the catalyst and then used, depending upon the particular application, and it is preferred to use it after carrying out the purification.

The DMC catalyst obtained by the process of the present invention has a high catalytic activity and a long useful life, whereby it is possible to reduce the amount of the DMC catalyst remaining in the produced polyether polyol.

Further, a side reaction can be suppressed by using the DMC catalyst obtained by the process of the present invention, whereby it is possible to produce a polyether polyol having a low total unsaturation degree, a narrow molecular weight distribution (Mw/Mn) and a high molecular weight. The total unsaturation degree is preferably from 0.001 to 0.03 meq/g, more preferably from 0.003 to 0.01 meq/g. The molecular weight distribution (Mw/Mn) is obtained by measuring the mass average molecular weight (Mw) and the number average molecular weight (Mn) as calculated as polystyrene at 25°C by using tetrahydrofuran as a solvent, by a gel permeation chromatography (GPC) method.

The hydroxyl value of the polyether polyol is preferably at most 60 mgKOH/g, more preferably at most 28 mgKOH/g, further preferably at most 24 mgKOH/g, particularly preferably at most 18 mgKOH/g. The hydroxyl value of the polyether polyol is preferably at least 2 mgKOH/g, more preferably at least 5 mgKOH/g.

Applications of the polyether polyol may, for example, be a raw material for polyurethanes (polyurethane foams or polyurethane elastomers), a raw material for adhesives, a raw material for coating materials, a surfactant, a functional oil (such as lubricant oil), a raw material for sealants, etc.

In the process for producing a DMC catalyst of the present invention as described in the foregoing, the aqueous metal halide compound solution and the aqueous transition metal cyanide compound solution are contacted in a laminar flow state to obtain a double metal cyanide complex, whereby solid particles of the double metal cyanide complex to be precipitated have a small particle size and a high particle size uniformity. Further, since the liquid containing the double metal cyanide complex is obtained by contacting the aqueous metal halide compound solution and the aqueous transition metal cyanide compound solution in a laminar flow state, as compared with a conventional case of contact in a turbulent flow state, control of the particle size is easy, and solid particles of the double metal cyanide complex having a uniform size (particle size distribution) can be obtained with good reproducibility. Further, since the liquid containing the double metal cyanide complex is obtained by contacting the aqueous metal halide compound solution and the aqueous transition metal cyanide compound solution in a laminar flow state, as compared with a conventional case of contact in a turbulent flow, the production process will not be cumbersome.

Accordingly, it is possible to produce a DMC catalyst having a small particle size and a high particle size uniformity simply and with good reproducibility.

Further, in the process for producing a DMC catalyst of the present invention, the above liquid containing a double metal cyanide complex and an organic ligand are mixed to obtain a dispersion containing a DMC catalyst, whereby the organic ligand will be coordinated to solid particles of the double metal cyanide complex having a small particle size and a high particle size uniformity.

Therefore, coordination of the organic ligand to the double metal cyanide complex will be strong. Accordingly, it is possible to produce a DMC catalyst having a high catalytic activity.

Further, the DMC catalyst of the present invention as described above, is a DMC catalyst obtained by the process of the present invention, whereby the catalytic activity is high, the particle size is small, and the particle size uniformity is high.

Further, in the method for producing a polyether polyol of the present invention as described in the foregoing, a DMC catalyst having a small particle size and a high particle size uniformity, is used, whereby it is possible to produce a polyether polyol having a narrow molecular weight distribution, a low unsaturation degree, a low viscosity and a high molecular weight.

Further, in the method for producing a polyether polyol of the present invention, a DMC catalyst having a high catalytic activity is used, whereby a polyether polyol can be produced efficiently with a small amount of the DMC catalyst.

Further, in the method for producing a polyether polyol of the present invention, a DMC catalyst obtained by the process having good reproducibility of the particle size, is used, whereby it is possible to produce a polyether polyol with constant quality.

EXAMPLES

Now, the present invention will be described in further detail with reference to Examples, but it should be understood that the present invention is by no means restricted to such Examples.
Examples 1 to 6 are Working Examples of the present invention, and Examples 7 to 10 are Comparative Examples.

SIZE OF DMC CATALYST

By SEM (VE-8800, manufactured by KEYENCE), a DMC catalyst was observed at 2,000-fold magnifications. One having no small granules observed on its SEM photograph was evaluated to be "large", and one having small granules observed was evaluated to be "small".

SPECIFIC SURFACE AREA

The specific surface area of a DMC catalyst was measured by a gas adsorption measuring apparatus (AUTOSORB-1, manufactured by Quntachrome Instruments) and calculated from the nitrogen adsorption by BET method.

PORE VOLUME OF AT MOST 3 nm PORES

With respect to the pore volume of at most 3 nm pores of a DMC catalyst, by stepwisely changing the pressure of an absorptive material by the above BET method, the specific surface area of a DMC catalyst under each pressure was obtained, and by calculation by DFT method, the pore diameter distribution of the DMC catalyst was obtained by calculation by DFT method, whereby a cumulative volume of pores of at most 3 nm was taken as the pore volume of at most 3 nm pores. The pore volume of at most 3 nm pores can be obtained by numerically solving the adsorption isotherm $(N(P/P_0),W)$ to a certain combination of adsorbate/adsorbent, obtained by DFT method, by an adsorption isotherm equation of the following formula (4).

$$N(P/P_0) = \int_{W_{min}}^{W_{max}} N(P/P_0) \times f(W) \times dW \qquad (4)$$

In the above formula, $N(P/P_0)$ is adsorption isotherm data obtained by measurement, W is a pore width, and f(W) is a pore diameter distribution function.

DESORPTION TEMPERATURE OF ORGANIC LIGAND

The desorption temperature of an organic ligand of a DMC catalyst was obtained from the thermal peak attributable to the organic ligand by measuring the mass decrease from 20°C to 450°C by using a TG/DTA apparatus (EXSTAR 6000, manufactured by Seiko Instruments) in a nitrogen atmosphere at a temperature raising rate of 10°C/min under conditions of a sample mass of 10 mg and a sampling interval of 1 second.

CATALYTIC ACTIVITY

Into a 200 mL stainless steel pressure resistant reactor equipped with a stirrer, 25 g of a polyether polyol (which was a polyether polyol having a molecular weight of 1,000 obtained by adding propylene oxide to glycerol) and 0.5 mg of a DMC catalyst were introduced. After flushing with nitrogen, the temperature was raised to 120°C, and while maintaining the stirring rate at 500 rpm, 8 g of propylene oxide (PO) was supplied to the reactor, and reacted. When the pressure in the reactor decreased, PO was supplied at a rate of 1 g/min while maintaining the internal temperature of the reactor at 120°C, and stirring was continued until PO no longer polymerized. Thereafter, deaeration was carried out under reduced pressure, and the mass of the polyether polyol was weighed. The value obtained by dividing the mass (kg) of the polyether polyol by 0.5 mg was taken as the catalytic activity (kg/g catalyst).

The filtration amount of remaining metal is measured as follows.

A glass filter container was attached to a weighed container, and further, a filter paper of 5.0 μm (PTFE filter, diameter: 480 mm, effective filtration diameter: 410 mm) was attached. A polyether polyol (100 g) produced by using a DMC catalyst was added to hexane (100 g) as a solvent for dilution, and the dissolved sample was introduced from the top of the filter paper for filtration. After natural filtration for 30 minutes, the yield of the filtered sample was measured.

EXAMPLE 1

An apparatus for producing a DMC catalyst as shown in Fig.1 was prepared. As the first reactor 20, one shown in Fig. 2 was used.

As the membrane 22, a porous membrane having pores 22a having a pore diameter of 80 μm formed at a pitch of 300 μm in an array of 8 rows × 116 columns on a SUS 304 membrane having a thickness of 50 μm, a width of 50 mm and a length of 100 mm, was used. That is, 1,328 pores 22a were formed so that they were accommodated in a rectangular shape having a width of 2.18 mm and a length of 49.58 mm.

As the first member 28, a PTFE plate having a thickness of 20,000 μm (20 mm) was used in which a through hole 28a having a hole diameter of 3,000 μm (3 mm) and a through hole 28b having a hole diameter of 3,000 μm (3 mm) were formed.

As the second member 30, a PTFE plate having a thickness of 400 μm was used in which a cutout 30a having a length of 95,000 μm (95 mm) and a width of 6,000 μm (6 mm) was formed.

As the fourth member 32, a PTFE plate having a thickness of 2,000 μm (2 mm) was used in which a cutout 32a having a length of 76,000 μm (76 mm) and a width of 6,000 μm (6 mm) was formed.

As the fifth member 34, a PTFE plate having a thickness of 20,000 μm (20 mm) was used in which a through hole 34a having a hole diameter of 3,000 μm (3 mm) was formed.

The pump 16 was driven to supply 20.2 g of a 50.5 mass% zinc chloride aqueous solution from the storage tank 12 to the second flow path 26 from the through hole 34 of the first reactor maintained at a temperature of 40°C at a constant supply rate of 0.45 mL/min. At the same time, the pump 18 was driven to supply 79.2 g to a 5.3 mass% $K_3Co(CN)_6$ aqueous solution from the storage tank 14 to the first flow path 24 of the through hole 28a of the first reactor 20 maintained at a temperature of 40°C at a constant supply rate of 2.5 mL/min.

The aqueous zinc chloride solution was passed through pores 22a of the membrane 22 and pushed out from the pores 22a into the aqueous $K_3Co(CN)_6$ solution flowing in the first flow path 24. The aqueous zinc chloride solution is considered to have mixed into the aqueous $K_3Co(CN)_6$ solution in the form of fine droplets of from 80 to 300 μm. In the first flow path 24, the aqueous $K_3Co(CN)_6$ solution and the aqueous zinc chloride solution in such fine droplet form were contacted and reacted, whereby solid particles of a double metal cyanide complex were precipitated. The average retention time of each aqueous solution in the first reactor 20 was one minute.

The Reynolds number of the flow of the aqueous $K_3Co(CN)_6$ solution flowing in the first flow path 24 was 15, as calculated from a hydraulic radius of 187.5 μm, a flow rate of 18.0 mm/s, a density of 1,020 kg/m$^3$ and a viscosity of $8.0×10^{-4}$ Pa · s, and thus showing a laminar flow state.

The Reynolds number of the flow of the aqueous zinc chloride solution passing through the pores 22a of the membrane 22 was 200, as calculated from a flow path inner diameter of 80 μm, a flow rate of $15×10^2$ mm/s, a density of 1,500 kg/m$^3$ and a viscosity of $10.0×10^{-4}$ Pa · s, thus showing a laminar flow state.

Further, the aqueous zinc chloride solution in the fine droplet form flowed in the aqueous $K_3Co(CN)_6$ solution in the laminar flow state, whereby the contact between the aqueous $K_3Co(CN)_6$ solution and the aqueous zinc chloride solution in the fine droplet form, was carried out in a laminar flow state.

The solution containing solid particles of the double metal cyanide complex was introduced to the second reactor 40 having an internal capacity of 500 mL maintained at a temperature of 40°C through a conduit. While stirring the liquid at 300 rpm, 160 g of a 50 mass% tert-butyl alcohol aqueous solution as an aqueous organic ligand solution was added to the liquid to obtain a mixed liquid containing 30.8 mass% of tert-butyl alcohol. Such a mixed liquid was heated to 60°C and stirred for 60 minutes to obtain a dispersion containing a DMC catalyst. The average retention time of the mixed liquid in the second reactor 40 was 60 minutes.

The dispersion was subjected to filtration by a filtration device 52 (pressure filtration device) to obtain a filter cake.

To the filter cake, 36 g of tert-butyl alcohol and 84 g of distilled water (tert-butyl alcohol: 30.0 mass%) were added, followed by stirring at 20°C for 30 minutes for washing, followed by filtration to obtain a filter cake.

The filter cake was dried for three hours under reduced pressure at 80°C, followed by pulverization to obtain a powdery DMC catalyst.

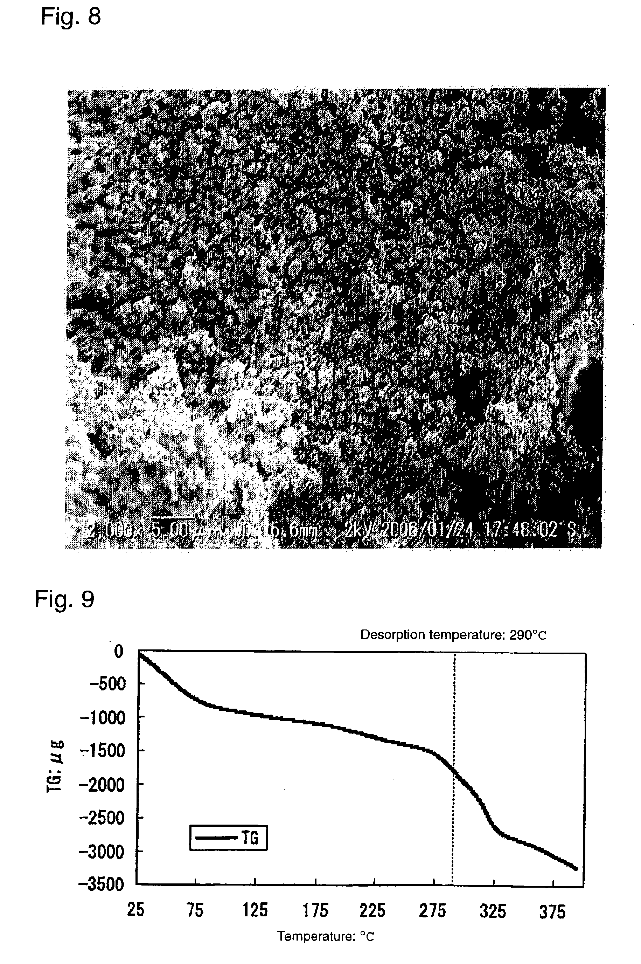

The size, specific surface area, pore volume of at most 3 nm pores, desorption temperature of the organic ligand, catalytic activity and filtration amount of remaining metal, of the DMC catalyst, are shown in Table 1. Further, a SEM photograph of the DMC catalyst is shown in Fig. 8, and a graph of the TG-DTA analysis is shown in Fig. 9.

EXAMPLE 2

A DMC catalyst was obtained in the same manner as in Example 1 except that a uniforate membrane having one pore 22a having a pore diameter of 5 mm formed on a SUS 304 membrane having a thickness of 50 $\mu$m, was used as the membrane 22.

The average retention time of each aqueous solution in the first reactor 20 was one minute.

The average retention time of the mixed liquid in the second reactor 40 was 60 minutes.

The Reynolds number of the flow of the aqueous zinc chloride solution passing through the pore 22a of the membrane 22 was 1, thus showing a laminar flow state.

The size, specific surface area, pore volume of at most 3 nm pores, desorption temperature of the organic ligand, catalytic activity and filtration amount of remaining metal, of the DMC catalyst, are shown in Table 1.

EXAMPLE 3

A DMC catalyst was obtained in the same manner as in Example 1 except that the supply rate of the aqueous zinc chloride solution was changed to 0.2 mL/min.

The average retention time of each aqueous solution in the first reactor 20 was one minute.

The average retention time of the mixed liquid in the second reactor 40 was 60 minutes.

The Reynolds number of the flow of the aqueous zinc chloride solution passing through pores 22a of the membrane 22 was 100, thus showing a laminar flow state.

The size, specific surface area, pore volume of at most 3 nm pores, desorption temperature of the organic ligand, catalytic activity and filtration amount of remaining metal, of the DMC catalyst, are shown in Table 1.

EXAMPLE 4

A DMC catalyst was obtained in the same manner as in Example 1 except that the supply rate of the aqueous $K_3Co(CN)_6$ solution was changed to 1.25 mL/min.

The average retention time of each aqueous solution in the first reactor 20 was two minutes.

The average retention time of the mixed liquid in the second reactor 40 was 60 minutes.

The Reynolds number of the flow of the aqueous $K_3Co(CN)_6$ solution flowing in the first flow path 24 was 7, thus showing a laminar flow state.

The size, specific surface area, pore volume of at most 3 nm pores, desorption temperature of the organic ligand, catalytic activity and filtration amount of remaining metal, of the DMC catalyst, are shown in Table 1.

EXAMPLE 5

A DMC catalyst was obtained in the same manner as in Example 1 except that the supply rate of the aqueous $K_3Co(CN)_6$ solution was changed to 5.0 mL/min.

The average retention time of each aqueous solution in the first reactor 20 was 30 seconds.

The average retention time of the mixed liquid in the second reactor 40 was 60 minutes.

The Reynolds number of the flow of the aqueous $K_3Co(CN)_6$ solution flowing in the first flow path 24 was 30, thus showing a laminar flow state.

The size, specific surface area, pore volume of at most 3 nm pores, desorption temperature of the organic ligand, catalytic activity and filtration amount of remaining metal, of the DMC catalyst, are shown in Table 1.

EXAMPLE 6

A DMC catalyst was obtained in the same manner as in Example 1 except that the aqueous zinc chloride solution in the storage tank 12 was changed to 60.6 g, and the aqueous $K_3Co(CN)_6$ solution in the storage tank 14 was changed to 237.6 g.

The average retention time of each aqueous solution in the first reactor 20 was one minute.

The average retention time of the mixed liquid in the second reactor 40 was 60 minutes.

The size, specific surface area, pore volume of at most 3 nm pores, desorption temperature of the organic ligand, catalytic activity and filtration amount of remaining metal, of the DMC catalyst, are shown in Table 1.

EXAMPLE 7

79.2 g of a 5.3 mass% $K_3Co(CN)_6$ aqueous solution was put into a reactor. Then, the pump was driven to supply 20.02 g of a 50.5 mass% zinc chloride aqueous solution from the storage tank to the reactor at a constant supply rate of 0.45 mL/min.

The aqueous zinc chloride solution was passed through the above-mentioned uniforate membrane (pore diameter: 5 mm) and pushed out in the from of fine droplets from the pore into the aqueous $K_3Co(CN)_6$ solution, while stirring the aqueous $K_3Co(CN)_6$ solution at 300 rpm by a stirring vane, so that the aqueous $K_3Co(CN)_6$ solution and the aqueous zinc chloride solution in the fine droplet form were contacted and reacted, whereby solid particles of a double metal cyanide complex were precipitated.

The Reynolds number of the flow of the aqueous $K_3Co(CN)_6$ solution in the reactor was more than 280,000, thus showing a turbulent flow state.

The Reynolds number of the flow of the aqueous zinc chloride solution passing through the pore of the uniforate membrane was 1, thus showing a laminar flow state.

Thereafter, in the same manner as in Example 1, a DMC catalyst was obtained.

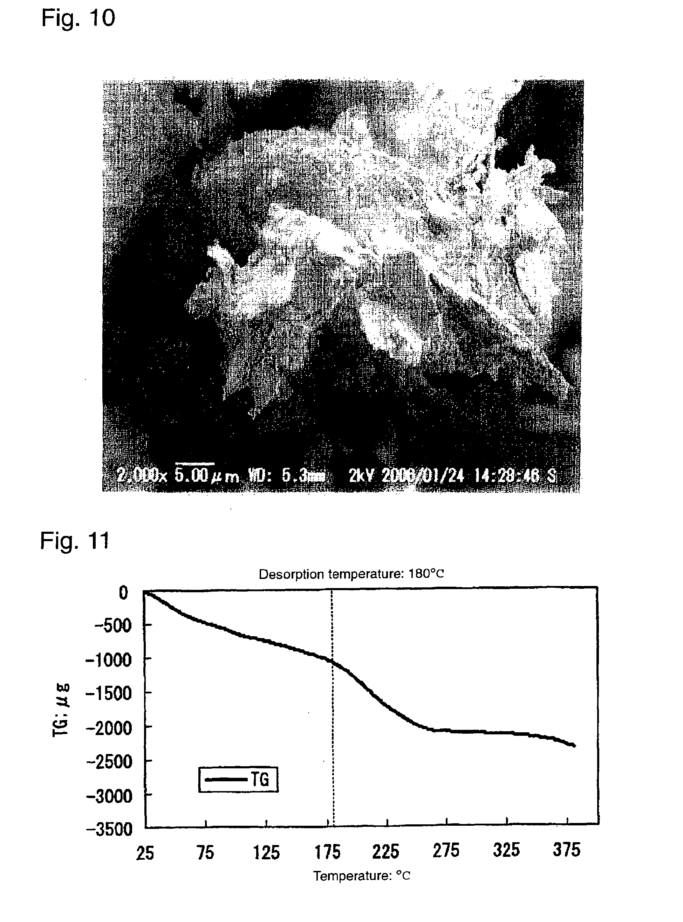

The size, specific surface area, pore volume of at most 3 nm pores, desorption temperature of the organic ligand, catalytic activity and filtration amount of remaining metal, of the DMC catalyst, are shown in Table 1. Further, a SEM photograph of the DMC catalyst is shown in Fig. 10, and a graph of the TG-DTA analysis is shown in Fig. 11.

EXAMPLE 8

20.2 g of a 50.5 mass% zinc chloride aqueous solution was put into a reactor. Then, the pump was driven to supply 79.2 g of a 5.3 mass% $K_3Co(CN)_6$ aqueous solution from the storage tank to the reactor at a constant supply rate of 2.5 mL/min.

The aqueous $K_3Co(CN)_6$ solution was passed through the above-mentioned uniforate membrane (pore diameter: 5 mm) and pushed out in the from of fine droplets from the pore into the aqueous zinc chloride solution while stirring the aqueous zinc chloride solution at 300 rpm by a stirring vane, so that the aqueous zinc chloride solution and the aqueous $K_3Co(CN)_6$ solution in the fine droplet form were contacted and reacted, whereby solid particles of a double metal cyanide complex were precipitated.

The Reynolds number of the flow of the aqueous $K_3Co(CN)_6$ solution passing through the pore of the uniforated membrane was 1, thus showing a laminar flow state.

The Reynolds number of the flow of the aqueous zinc chloride solution in the reactor was more than 280,000, thus showing a turbulent flow state.

Thereafter, in the same manner as in Example 1, a DMC catalyst was obtained.

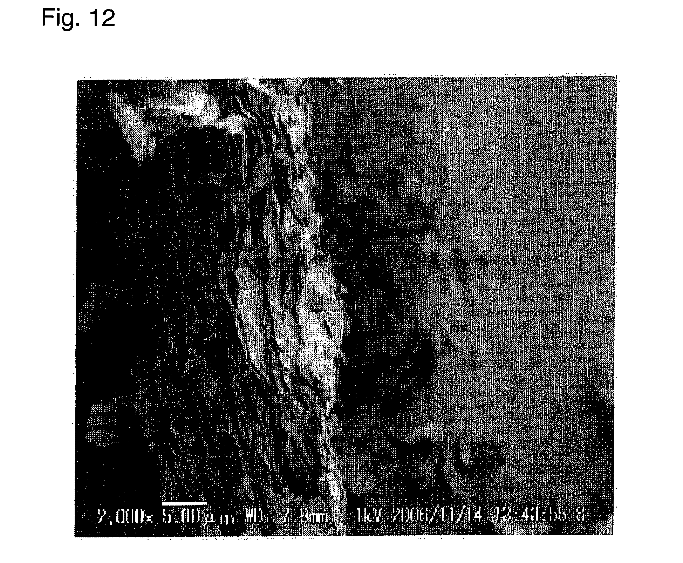

The size, specific surface area, pore volume of at most 3 nm pores, desorption temperature of the organic ligand, catalytic activity and filtration amount of remaining metal, of the DMC catalyst, are shown in Table 1. Further, a SEM photograph of the DMC catalyst is shown in Fig. 12.

EXAMPLE 9

20.2 g of a 50.5 mass% zinc chloride aqueous solution was put into a reactor. Then, while stirring the aqueous zinc chloride solution at 300 rpm by a stirring vane, the pump was driven to directly supply 79.2 g of a 5.3 mass% $K_3Co(CN)_6$ aqueous solution from the storage tank, without passing through a uniforated membrane, to the reactor at a supply rate of 2.65 mL/min. Stirring was continued for further 30 minutes to obtain a dispersion of a double metal cyanide complex.

The Reynolds number of the flow of the aqueous zinc chloride solution and the aqueous $K_3Co(CN)_6$ solution in the reactor was more than 280,000, thus showing a turbulent flow state.

The interior of the reactor was heated to 60°C, and while stirring the dispersion at 300 rpm, 160 g of a 50 mass% tert-butyl alcohol aqueous solution was added to the dispersion to obtain a mixed liquid containing 30.8 mass% of tert-butyl alcohol. Such a mixed liquid was further stirred for 60 minutes to obtain a dispersion having a DMC catalyst.

Thereafter, in the same manner as in Example 1, a DMC catalyst was obtained.

The size, specific surface area, pore volume of at most 3 nm pores, desorption temperature of the organic ligand, catalytic activity and filtration amount of remaining metal, of the DMC catalyst, are shown in Table 1. Further, a SEM photograph of the DMC catalyst is shown in Fig. 12.

EXAMPLE 10

Into a communicating reactor, a 50.5 mass% zinc chloride aqueous solution was supplied at a constant flow rate of 1.5 mL/min, and a 5.3 mass% $K_3Co(CN)_6$ aqueous solution was supplied at a constant flow rate of 0.05 mL/min.

The Reynolds number of the flow of the aqueous zinc chloride solution and the aqueous $K_3Co(CN)_6$ solution in the reactor was more than 200,000, thus showing a turbulent flow state.

In the reactor, the aqueous zinc chloride solution and the aqueous $K_3Co(CN)_6$ solution were reacted at a reaction temperature of 40°C and retained for 15 minutes. Then, 180 mL of a 50 mass% tert-butyl alcohol aqueous solution was dropwise added, and the temperature was raised to 60°C. After stirring for one hour, the mixture was subjected to filtration to obtain a filter cake.

Thereafter, in the same manner as in Example 1, a DMC catalyst was obtained.

The size, specific surface area, pore volume of at most 3 nm pores, desorption temperature of the organic ligand, catalytic activity and filtration amount of remaining metal, of the DMC catalyst, are shown in Table 1.

TABLE 1

| | | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|
| Aqueous metal halide compound solution | Concentration (mass%) | 50.5 | 50.5 | 50.5 | 50.5 | 50.5 | 50.5 | 50.5 | 50.5 | 50.5 | 50.5 |
| | Supply rate (mL/min) | 0.45 | 0.45 | 0.2 | 0.45 | 0.45 | 0.45 | 0.45 | - | - | 1.5 |
| | Reynolds number | 200 | 1 | 100 | 200 | 200 | 200 | 1 | >280,000 | >280,000 | >200,000 |
| | Flow state | Laminar flow | Laminar flow | Laminar flow | Laminar flow | Laminar flow | Laminar flow | Laminar flow | Turbulent flow | Turbulent flow | Turbulent flow |
| Aqueous transition metal cyanide compound solution | Concentration (mass%) | 5.3 | 5.3 | 5.3 | 5.3 | 5.3 | 5.3 | 5.3 | 5.3 | 5.3 | 5.3 |
| | Supply rate (mL/min) | 2.5 | 2.5 | 2.5 | 1.25 | 5 | 2.5 | - | 2.5 | 2.5 | 0.5 |
| | Reynolds number | 15 | 15 | 15 | 7 | 30 | 15 | >280,000 | 1 | >280,000 | >200,000 |
| | Flow state | Laminar flow | Laminar flow | Laminar flow | Laminar flow | Laminar flow | Laminar flow | Turbulent flow | Laminar flow | Turbulent flow | Turbulent flow |
| Membrane | Pore diameter (mm) | 0.08 | 5 | 0.08 | 0.08 | 0.08 | 0.08 | 5 | 5 | - | - |
| | Number of pores | 1,328 | 1 | 1,328 | 1,328 | 1,328 | 1,328 | 1 | 1 | - | - |

(continued)

|  |  | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|
| DMC catalyst | Size | Small | Small | Small | Small | Small | Small | Large | Large | Large | Large |
|  | Specific surface area ($m^2/g$) | 52 | 60 | 55 | 52 | 54 | 44 | 200 | 205 | 180 | 220 |
|  | Pore volume of at most 3 nm pores ($cc/g \times 10^{-2}$) | 0.49 | 0.55 | 0.52 | 0.52 | 0.47 | 0.38 | 6 | 5.5 | 6.4 | 7.6 |
|  | Desorption temperature of organic ligand (°C) | 290 | 280 | 280 | 290 | 290 | 290 | 180 | 185 | 180 | 190 |
|  | Catalytic activity | >170 | >170 | >170 | >170 | >170 | >170 | >170 | >170 | >170 | >170 |
|  | Filtration amount of remaining metal (g/30 minutes) | 65 | 65 | 65 | 65 | 65 | 70 | 60 | 60 | 50 | <40 |

From the SEM photograph, it is evident that the DMC catalyst in Example 1 has a small size and a high particle size uniformity. As compared with DMC catalysts in Examples 7 and 8, it shows an outer appearance such that particles of the DMC catalysts are gathered.

The specific surface areas of the DMC catalysts in Examples 1 to 6 were smaller than the DMC catalysts in Examples 7 to 10. The pore volumes of at most 3 nm pores of the DMC catalysts in Examples 1 to 6 were smaller than the DMC catalyst in Examples 7 to 10. The desorption temperatures of the organic ligands of the DMC catalysts in Examples 1 to 6 were from 280 to 290°C, which were higher by about 100°C than the DMC catalysts in Examples 7 to 10, thus indicating that in the DMC catalysts in Examples 1 to 6, the organic ligands were strongly coordinated to the double metal cyanide complexes.

The catalytic activities of the DMC catalysts in Examples 1 to 6 were substantially equal to the DMC catalysts in Examples 7 to 10.

As is evident from the foregoing, in the DMC catalysts in Examples 1 to 6 formed in a laminar flow state, the catalytic activities are substantially equal to the DMC catalysts in Examples 7 to 10, despite the specific surface areas are small, and the pore volumes of at most 3 nm pores are small. This indicates that in the DMC catalysts in Examples 1 to 6, the aggregated state of each catalyst is dense, and the coordination power of the organic ligand is strong as compared with the DMC catalysts in Examples 7 to 10, whereby it is considered that the catalytic activity per unit area of the catalyst is high.

The filtration amount of remaining metal in the DMC catalysts in Examples 1 to 6 is large as compared with the DMC catalysts in Examples 7 to 10, thus indicating that the DMC catalyst residue of at least 5.0 μm contained in the polyether polyol was removed. This indicates that the particles of the DMC catalysts in Examples 1 to 6 are fine and uniform and have good dispersability in the polyether polyol.

As described in the foregoing, according to the process in Examples 1 to 6, as compared with Examples 7 to 10, control of the particle size of the DMC catalyst is possible, and fine and uniform particles can be obtained with good reproducibility, and DMC catalysts were obtained which had a high catalytic activity and a good filtration amount of remaining metal.

INDUSTRIAL APPLICABILITY

The DMC catalyst obtained by the process of the present invention has a high catalytic activity, a small particle size and a high particle size uniformity, and thus is very useful as a catalyst to be used for ring-opening polymerization of an alkylene oxide.

The entire disclosure of Japanese Patent Application No. 2007-102507 filed on April 10, 2007 including specification, claims, drawings and summary are incorporated herein by reference in its entirety.

**Claims**

1. A process for producing a double metal cyanide complex catalyst having an organic ligand, comprising the following steps (a) and (b):

    (a) a step of contacting an aqueous metal halide compound solution and an aqueous transition metal cyanide compound solution in a laminar flow state to obtain a liquid containing a double metal cyanide complex, and
    (b) a step of mixing the liquid containing a double metal cyanide complex, and an organic ligand, to obtain a dispersion containing a double metal cyanide complex catalyst having an organic ligand.

2. The process for producing a double metal cyanide complex catalyst having an organic ligand according to Claim 1, wherein the step (a) is the following step (a-1):

    (a-1) a step of supplying the aqueous transition metal cyanide compound solution continuously to a first flow path in a first reactor, the inside of which is divided into the first flow path and a second flow path by a membrane having pores; supplying the aqueous metal halide compound solution continuously to the second flow path; and while permitting the aqueous metal halide compound solution in the second flow path to pass through the pores of the membrane in a laminar flow state, pushing the aqueous metal halide compound solution out of the pores of the membrane in the form of fine droplets into the aqueous transition metal cyanide compound solution flowing in a laminar flow state in the first flow path, to let the aqueous transition metal cyanide compound solution and the aqueous metal halide compound solution in the form of fine droplets contact each other in a laminar flow state in the first flow path, thereby to obtain the liquid containing a double metal cyanide complex.

3. The process for producing a double metal cyanide complex catalyst having an organic ligand according to Claim 1 or 2, wherein each laminar flow state is represented by a Reynolds number of at most 2,100.

4. The process for producing a double metal cyanide complex catalyst having an organic ligand according to Claim 1, wherein the step (b) is the following step (b-1):

   (b-1) a step of supplying the liquid containing a double metal cyanide complex, and an organic ligand or an aqueous organic ligand solution to a second reactor, followed by stirring, to obtain the dispersion containing a double metal cyanide complex catalyst having an organic ligand.

5. The process for producing a double metal cyanide complex catalyst having an organic ligand according to Claim 1, which further has the following step (c):

   (c) a step of filtering the dispersion containing a double metal cyanide complex catalyst having an organic ligand.

6. The process for producing a double metal cyanide complex catalyst having an organic ligand according to Claim 5, which further has the following step (d):

   (d) a step of washing the double metal cyanide complex catalyst having an organic ligand obtained in the step (c).

7. The process for producing a double metal cyanide complex catalyst having an organic ligand according to Claim 6, wherein the steps (c) and (d) are the following steps (c-1), (d-1) and (c-2):

   (c-1) a step of filtering the dispersion containing a double metal cyanide complex catalyst having an organic ligand to obtain a filter cake of the double metal cyanide complex catalyst having an organic ligand,
   (d-1) a step of mixing the filter cake and an organic ligand or an aqueous organic ligand solution, and stirring the mixed liquid at from 0 to 100°C to wash the double metal cyanide complex catalyst having an organic ligand,
   (c-2) a step of filtering the above mixed liquid to obtain a filter cake.

8. The process for producing a double metal cyanide complex catalyst having an organic ligand according to Claim 7, wherein in the filter cake obtained in the step (c-1) or (c-2), the content of the double metal cyanide complex catalyst having an organic ligand is from 20 to 60 mass%.

9. The process for producing a double metal cyanide complex catalyst having an organic ligand according to Claim 7, wherein the steps (d-1) and (c-2) are repeated at least twice.

10. A double metal cyanide complex catalyst having an organic ligand obtained by the process as defined in any one of Claims 1 to 9, which has a specific surface area of from 20 to 150 m$^2$/g as measured by BET method, wherein the pore volume of at most 3 nm pores is from $0.05\times10^{-3}$ to $10\times10^{-3}$ cc/g as calculated by DFT method based on the specific surface area.

11. The double metal cyanide complex catalyst having an organic ligand according to Claim 10, wherein the desorption temperature of the organic ligand is from 250 to 390°C.

12. The double metal cyanide complex catalyst having an organic ligand according to Claim 10 or 11, wherein the organic ligand is at least one member selected from the group consisting of tert-butyl alcohol, n-butyl alcohol, isobutyl alcohol, tert-pentyl alcohol, isopentyl alcohol, N,N-dimethylacetamide, ethylene glycol dimethyl ether, diethylene glycol dimethyl ether, triethylene glycol dimethyl ether, ethylene glycol mono-tert-butyl ether, isopropenyl alcohol and dioxane.

13. A method for producing a polyether polyol, which comprises subjecting an alkylene oxide to ring-opening polymerization in the presence of a double metal cyanide complex catalyst having an organic ligand obtained by the process as defined in any one of Claims 1 to 9, and an initiator having active hydrogen atoms.

Fig. 1

Fig. 2

Fig. 3

Fig. 4

Fig. 5

22

22a

Fig. 6

32

32a

Fig. 7

34

34a

## Fig. 8

## Fig. 9

Fig. 10

Fig. 11

Desorption temperature: 180°C

Temperature: °C

Fig. 12

| **INTERNATIONAL SEARCH REPORT** | International application No. |
|---|---|
| | PCT/JP2008/056982 |

A.  CLASSIFICATION OF SUBJECT MATTER
*C08G65/10*(2006.01)i

According to International Patent Classification (IPC) or to both national classification and IPC

B.  FIELDS SEARCHED

Minimum documentation searched (classification system followed by classification symbols)
C08G65/10

Documentation searched other than minimum documentation to the extent that such documents are included in the fields searched
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | WO 2000/002951 A1  (Asahi Glass Co., Ltd.),<br>20 December, 2000 (20.12.00),<br>Claims 1 to 5; page 6, lines 21 to 24; page 10,<br>lines 15 to 22; page 19, lines 1 to 18 | 1,3-7,9,13<br>2,8,10-12 |
| A | JP 2005-15786 A  (Asahi Glass Co., Ltd.),<br>20 January, 2005 (20.01.05) | 1-13 |
| A | JP 2003-165836 A  (Asahi Glass Co., Ltd.),<br>10 June, 2003 (10.06.03) | 1-13 |
| A | JP 2003-165837 A  (Asahi Glass Co., Ltd.),<br>10 June, 2003 (10.06.03) | 1-13 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 May, 2008 (21.05.08) | 03 June, 2008 (03.06.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**
Information on patent family members

International application No.

PCT/JP2008/056982

| | | | |
|---|---|---|---|
| WO 2000/002951 A1 | 2000.12.20 | US 6313060 B1<br>EP 1022300 A1<br>DE 69920648 D<br>DE 69920648 T<br>CA 2301511 A<br>HK 1030787 A<br>ID 23505 A<br>CN 1273591 A | |
| JP 2005-15786 A | 2005.01.20 | US 2006/0004233 A1<br>EP 1632517 A1<br>WO 2004/108794 A1<br>KR 10-2006-0015302 A<br>CN 1802400 A | |
| JP 2003-165836 A | 2003.06.10 | (Family: none) | |
| JP 2003-165837 A | 2003.06.10 | (Family: none) | |

Form PCT/ISA/210 (patent family annex) (April 2007)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4145123 A
- JP 7196778 A
- JP 2004535502 A
- JP 2005015786 A
- JP 2007102507 A